# EUROPÄISCHE PATENTSCHRIFT

(11) **EP 4 490 503 B1**
(45) Veröffentlichungstag und Bekanntmachung des Hinweises auf die Patenterteilung: **18.02.2026**
(21) Anmeldenummer: 23782853.8
(22) Anmeldetag: 27.09.2023
(51) Int. Cl.: G01N 29/06, G01N 29/032, G01N 29/22, G01N 29/265

(54) **VERFAHREN ZUM BETREIBEN EINES AKUSTISCHEN RASTERMIKROSKOPS UND AKUSTISCHES RASTERMIKROSKOP**
METHOD FOR OPERATING AN ACOUSTIC SCANNING MICROSCOPE AND ACOUSTIC SCANNING MICROSCOPE
PROCÉDÉ DE FONCTIONNEMENT D'UN MICROSCOPE À BALAYAGE ACOUSTIQUE ET MICROSCOPE À BALAYAGE ACOUSTIQUE

(30) Priorität: 04.10.2022 DE 102022125493
(43) Veröffentlichungstag der Anmeldung: 15.01.2025
(73) Patentinhaber: PVA TePla Analytical Systems GmbH, 73463 Westhausen (DE)
(72) Erfinder: HOFFROGGE, Peter, 73447 Oberkochen (DE); WIESLER, Ingo, 74405 Gaildorf (DE); KÖNIG, Stefan, 07607 Eisenberg (DE); WOLF, Mario, 01683 Nossen (DE)
(74) Vertreter: Seemann & Partner Patentanwälte mbB
(86) Internationale Anmeldenummer: PCT/EP2023/076778
(87) Internationale Veröffentlichungsnummer: WO 2024/074381

(56) Entgegenhaltungen:
- DE-B4- 102006 005 448
- US-A- 4 781 067
- US-A1- 2007 180 914
- US-A1- 2017 370 885
- US-A1- 2022 252 547

## Beschreibung

Die Erfindung betrifft ein Verfahren zum Betreiben eines akustischen Rastermikroskops, insbesondere Ultraschallrastermikroskop, und ein akustisches Rastermikroskop, insbesondere Ultraschallrastermikroskop.

Ultraschallmikroskope bzw. akustische Mikroskope, die auch als akustische Rastermikroskope (Scanning Acoustic Microscope (SAM)) bezeichnet werden, werden eingesetzt, um in einem Rasterverfahren Proben mittels Ultraschall abzurastern und die reflektierten Schallwellen zu verarbeiten, um daraus Bilder von Strukturen der Probe zu erzeugen.

Hierbei verfügen die Ultraschallmikroskope über einen Ultraschallkopf, der auch als Transducerkopf bezeichnet wird. Der Ultraschallkopf besteht daher aus einer akustischen Linse und einen daran angeschlossenen Schallwandler (Transducer).

Bei der Untersuchung in der akustischen Mikroskopie wird als Koppelmedium zwischen dem akustischen Transducer und der zu untersuchenden Probe Wasser verwendet, um eine gute Übertragung von den vom Transducer ausgesendeten Schallwellen zur Probe zu erreichen. Hierfür ist ein Koppelmedium mit guten Eigenschaften bei der Schallleitung erforderlich.

Bei der Ultraschallmikroskopie, die im Frequenzbereich von 1 MHz bis 5 GHz arbeitet, ist es üblich, dass die Proben in einem Wasserbecken untergetaucht werden und auf einer Probenhalterung platziert werden, wobei die Untersuchung der Probe mittels Ultraschallmikroskops in Immersion geführt wird. Bei einem anderen Verfahren wird ein Wasserstrahl verwendet, der zwischen dem Schallwandler und der Probe ausgebildet wird, um eine gute Schalleinkopplung in die Probe zu gewährleisten.

Ultraschallmikroskope, bei denen eine Probe mittels Ultraschall abgerastert wird und die hindurch gelassenen oder reflektierten Schallwellen verarbeitet werden, um daraus ein Bild zu erzeugen, sind aus dem Stand der Technik bekannt. Die Bilderzeugung ist zerstörungsfrei, wobei dadurch Informationen über den inneren Aufbau einer Probe erhalten werden. Durch die im Rasterverfahren gewonnen Bilder sind Analysen oder Überwachungen von Materialien, Elektronickomponenten etc. möglich.

Ferner finden bei der akustischen Mikroskopie Mehrkanal-Transducer Verwendung, bei denen sehr viele einzelne Elemente mit einer festen Fokallänge nebeneinander angeordnet sind. Die Pixelgröße in Y-Richtung, d.h. senkrecht zur Scanrichtung in X-Richtung, entspricht dabei dem Abstand der einzelnen Transducerelemente zueinander. Bei der Verwendung solcher Mehrkanal-Transducer werden entsprechend der Anzahl der Transducerelemente viele parallele linienförmige Abrasterungszeilen gleichzeitig aufgenommen. Bei Transducerelementen der Mehrkanal-Transducer ist der Abstand der Einzelelemente zueinander konstant und nicht veränderbar, wodurch die Höhe einer Zeile einer linienförmigen Abrasterung fest ist und die Pixelgröße in Y-Richtung, d.h. senkrecht zur Scanrichtung in X-Richtung, immer der Breite der einzelnen Transducerelemente entspricht und konstant ist. Durch die geringe Dimension der Einzelelemente in Y-Richtung, d.h. senkrecht zur Scanrichtung in X-Richtung, ist die Apertur der Linsen der Transducerelemente in dieser Richtung sehr gering, wodurch die Auflösung in der Y-Richtung gering ist.

In DE 10 2006 005 448 B4 ist ein akustisches Rastermikroskop, mit wenigstens zwei Transducern offenbart, wobei mittels einer ersten Vorrichtung die wenigstens zwei Transducer zu verschiedenen Positionen entlang einer Ebene zum lateralen Abscannen einer Probe verschoben werden. Die Probe wird hierbei in X-Y-Richtung Pixel für Pixel und Zeile für Zeile abgescannt, so dass die gesamte Fläche der Probe erfasst wird.

Darüber hinaus ist in US 4,781,067 ein akustisches Rastermikroskop mit einem balancierten Abtastmechanismus beschrieben. Der Transducer des Rastermikroskops wird mäanderförmig oberhalb einer zu untersuchenden Probe bewegt.

Ferner beschreibt US 2007/0180914 A1 allgemein ein akustisches Rastermikroskop, wobei ein Linearmotor verwendet wird, um einen Transducer in X- und Y-Richtung anzutreiben, während ein Motor zur Steuerung der Messwertaufnehmerbewegung in Z-Richtung verwendet wird.

Außerdem ist in US 2022/0252547 A1 ein akustisches Inspektionssystem offenbart. Das Inspektionssystem kann ein Prüfgerät umfassen. Hierbei kann eine Sondenbaugruppe zwei oder mehr elektroakustische Wandler umfassen. Die Wandleranordnungen können einer linearen oder gekrümmten Kontur folgen oder eine Anordnung von Elementen umfassen, die sich in zwei Achsen erstrecken, wie z. B. eine Matrix von Wandlerelementen.

Zudem zeigt US 2017/0370885 A1 ein System zur zerstörungsfreien Prüfung mit einer Ultraschall-Tauchsonde und einem Laservibrometer. Die Tauch-Ultraschallsonde und eine Probe werden in eine in einem Tauchbecken enthaltene Flüssigkeit eingetaucht, und das Laservibrometer ist außerhalb des Tauchbeckens angeordnet.

Eine Aufgabe der Erfindung besteht darin, Anwendungsmöglichkeiten bei der akustischen Rastermikroskopie bzw. bei einem akustischen Mikroskop zur Untersuchung von Proben, wie z.B. Wafern etc., zu vergrößern. Eine weitere Aufgabe der Erfindung besteht darin, auf effiziente und einfache Weise mittels eines akustischen Mikroskops, insbesondere Ultraschallrastermikroskops, großvolumige bzw. großflächige Proben, insbesondere mit einem hohen Datendurchsatz, zu untersuchen.

Die Aufgabe wird gelöst durch ein Verfahren zum Betreiben eines akustischen Rastermikroskops, insbesondere Ultraschallrastermikroskops, wobei mittels einer Transducereinheit, insbesondere mit einem oder mehreren jeweils einen Transducer und eine Linse aufweisenden Transducerelementen, eine Probe in einer X-Y-Ebene abgerastert wird, wobei zu einer linienförmigen Abrasterung der Probe die Transducereinheit in X-Richtung bewegt wird, wobei nach der oder einer linienförmigen Abrasterung der Probe durch die Transducereinheit die Transducereinheit in Y-Richtung um eine Versetzschrittweite versetzt wird, wobei während einer Untersuchung der Probe mittels des Rasterverfahrens für die Abrasterung der Probe die Größe der Versetzschrittweite der Transducereinheit in Y-Richtung variiert wird, wobei insbesondere nach der Versetzung der Transducereinheit in Y-Richtung wenigstens eine weitere linienförmige Abrasterung der Probe mittels der Transducereinheit in Y-Richtung durchgeführt wird.

Ein besonderer Vorteil des Verfahrens besteht darin, dass während einer Untersuchung einer Probe mittels des Rasterverfahrens die Versetzschrittweite der Transducereinheit in Y-Richtung während der Durchführung des Rasterverfahrens verändert wird, wodurch es möglich ist, besondere Bereiche einer Probe mit einer höheren (Pixel-)-Auflösung und andere weniger interessierende Bereiche der Probe mit einer geringeren (Pixel-)Auflösung abzuscannen bzw. zu untersuchen. Dabei kann die Zeit für eine gesamte Untersuchung der Probe verkürzt werden.

Ein weiterer Vorteil des Verfahrens besteht darin, dass das Scanverfahren den Einsatz von Transducereinheiten mit mehreren Transducerelementen ermöglicht, wobei die laterale Dimension der Transducerelemente größer als Pixelgröße ist, wobei bei dem erfindungsgemäßen Verfahren Einschränkungen in der freien Wahl der Pixelgröße und Verluste im Auflösungsvermögen und in der Detektions-Empfindlichkeit vermieden werden. Insbesondere wird eine Abweichung der einzelnen Transducerelemente von einer Referenzposition vermessen und beispielsweise in eine Kalibrationstabelle eingetragen. Bei Transducereinheiten mit Transducerelementen mit gleicher Fokallänge wird die abzurasterende Fläche der Probe aufgeteilt, wobei mit jedem einzelnen Transducerelement die Probe Zeile für Zeile abgerastert wird.

Das akustische Mikroskop, insbesondere Ultraschallrastermikroskop, zur Durchführung des Verfahrens weist ein Positioniersystem, wenigstens eine Transducereinheit, insbesondere mit mehreren Transducerelementen, eine Pulserzeugereinheit für die Transducereinheit, vorzugsweise Pulserzeuger mit einer den Transducerelementen entsprechenden Anzahl, und eine Empfangseinheit, insbesondere eine Empfangsvorrichtung für jedes Transducerelement auf. Außerdem weist das akustische Mikroskop ein Datenverarbeitungssystem und ein Modul zur Digitalisierung der analogen empfangenen Ultraschallsignale auf.

Bei dem erfindungsgemäßen Verfahren ist es bevorzugt, dass bei einer Transducereinheit mit mehreren Transducerelementen die lateralen Abstände der einzelnen Transducerelemente auf der Grundlage einer (Vor-)Kalibrierung berücksichtigt werden, so dass die zu untersuchende und abzurasternde Fläche einer Probe optimiert abgerastet wird. Dabei ist bei einer kontinuierlichen zeilenweisen d.h. linienförmigen Abrasterung (in X-Richtung) mit einer vorbestimmten und konfigurierbaren Anzahl von Bildpunkten pro Zeile der Abstand von Zeile zu Zeile in Y-Richtung frei wählbar. Vorzugweise werden die linienförmigen Abrasterungen solange mit gleichen kleinen Versetzschrittweiten in Y-Richtung durchgeführt wird, bis der maximale Abstand der Transducerelemente gleicher Eigenschaften untereinander erreicht ist und dann die Transducereinheit in Y-Richtung um diesen Abstand mit einer größeren Versetzschrittweite in Y-Richtung bewegt wird, so dass ein hochaufgelöstes Bild der zu untersuchenden Flächen bei erhöhter Analysegeschwindigkeit entsteht.

In einer Weiterbildung des Verfahrens ist vorgesehen, dass mehrere linienförmigen Abrasterungen der Probe (in X-Richtung) durch die Transducereinheit durchgeführt werden, wobei die Transducereinheit nach jeweils einer linienförmigen Abrasterung der Probe jeweils um eine kleine, vorzugsweise konstante, Versetzschrittweite in Y-Richtung versetzt wird und nach einer vorbestimmten Anzahl n (n ≥ 2, 3, ...) von mehreren linienförmigen Abrasterungen der Probe die Transducereinheit um eine große, vorzugsweise konstante, Versetzschrittweite, die größer als die kleine Versetzschrittweite ist, in Y-Richtung versetzt wird und/oder dass nach einer linienförmigen Abrasterung der Probe die Transducereinheit um eine große, vorzugsweise konstante, Versetzschrittweit in Y-Richtung versetzt wird und nach der Versetzung der Transducereinheit um die große Versetzschrittweite mehrere n (n ≥ 2, 3, ...) linienförmige Abrasterungen der Probe durch die Transducereinheit erfolgen, wobei nach jeder der mehreren linienförmigen n (n ≥ 2, 3, ...) Abrasterungen der Probe die Transducereinheit jeweils um eine kleine, vorzugsweise konstante, Versetzschrittweite in Y-Richtung, die kleiner als die große Versetzschrittweite ist, versetzt wird.

Dadurch wird ein hochaufgelöstes Bild der zu untersuchenden Flächen der Probe erreicht, bei dem z.B. die Pixelgröße bzw. der Abstand der linienförmigen Abrasterungen (in Y-Richtung) kleiner ist als der Abstand der einzelnen Transducerelemente (in Y-Richtung) eines, vorzugsweise linearen, Arrays mit Transducerelementen. Insbesondere ist das Verhältnis Pixelgröße bzw. Abstand der linienförmigen Abrasterungen zu Abstand der einzelnen Transducerelemente (in Y-Richtung) kleiner als 1:10, insbesondere kleiner als 1:100, weiter insbesondere 1:1000.

Außerdem ist es bei dem Verfahren bevorzugt, wenn die Transducereinheit in einem mäanderförmigen Verlauf in der X-Y-Ebene relativ zur Probe bewegt wird. Hierzu ist ein entsprechendes Positioniersystem vorgesehen, um die Transducereinheit relativ zur untersuchenden Probe zu bewegen.

Gemäß einem weiteren Ausführungsbeispiel ist bei dem Verfahren vorgesehen, dass
a.) die Probe unter Verwendung einer Transducereinheit für ein akustisches Rastermikroskop, insbesondere Ultraschallrastermikroskop, mit mehreren jeweils einen Transducer und eine Linse aufweisenden Transducerelementen, wobei wenigstens zwei Transducerelemente unterschiedliche Fokallängen aufweisen, abgerastert wird oder
b.) dass die Probe unter Verwendung einer Transducereinheit mit mehreren jeweils einen Transducer und eine, vorzugsweise akustische, Linse aufweisenden Transducerelementen abgerastert wird, wobei insbesondere die Transducerelemente die gleiche Fokallänge aufweisen und/oder die Transducerelemente in einer linearen oder rautenförmigen Anordnung in Y-Richtung nebeneinander angeordnet sind.

Darüber hinaus zeichnet sich eine Weiterbildung des Verfahrens dadurch aus, dass die Transducereinheit mehrere in Y-Richtung, vorzugsweise hintereinander und/oder linear, angeordnete Transducerelemente aufweist, wobei mehrere linienförmige m (m ≥ 2, 3, 4, ...) Abrasterungen in X-Richtung mittels der jeweiligen Transducerelemente durchgeführt werden, wobei die Abstände der linienförmigen m (m ≥ 2, 3, 4, ...) Abrasterungen durch die jeweiligen Transducerelemente in Y-Richtung äquidistant sind und nach der Durchführung der linienförmigen m (m ≥ 2, 3, 4, ...) Abrasterungen durch die Transducereinheit die Transducereinheit in Y-Richtung mit der Versetzschrittweite, die dem Produkt des äquidistanten Abstands der linienförmigen Abrasterungen mit der Anzahl der linienförmigen m (m ≥ 2, 3, 4, ...) Abrasterungen und der Anzahl der Transducerelemente der Transducereinheit in Y-Richtung entspricht, versetzt wird.

Vorteilhafterweise ist bei dem Verfahren die zu erzielende Bildauflösung unabhängig vom Abstand und der Anordnung der einzelnen Transducerelemente, z.B. eines Arrays. Außerdem sind die einzelnen Transducerelemente bezüglich ihres Auflösungsvermögens und ihrer Signalintensität frei einstellbar bzw. optimierbar.

Die durch das Verfahren erzielte oder zu erzielende Bildauflösung ist unabhängig vom Abstand und der Anordnung der einzelnen Transducerelemente einer Transducereinheit oder eines Transducerarrays, wobei insbesondere die einzelnen Transducerelemente bezüglich ihres Auflösungsvermögens und ihrer Fokallänge je nach Anforderung konfigurierbar sind.

Durch eine Verwendung von Transducerelementen verschiedener Fokallängen bei einer Transducereinheit, werden die zu untersuchenden Flächen oder Ebenen einer Probe in einer oder mehreren Tiefenebenen, die durch entsprechende Fokallängen der einzelnen Transducerelemente der Transducereinheit bzw. des Transducerarrays jeweils bestimmt sind oder werden, gemäß dem Verfahren in einer Ausgestaltung abgerastert. Außerdem ist gemäß einem weiteren Aspekt vorgesehen, dass die laterale Abweichung jedes einzelnen Transducerelements vermessen ist und das Scanfeld um den entsprechenden Betrag vergrößert wird, wobei bei der Erstellung der Bilder mögliche Abweichungen dahingehend korrigiert werden, das lückenlose und überdeckungsgleiche Bilder entstehen.

In einem weiteren Ausführungsbeispiel ist bei dem Verfahren vorgesehen, dass die Transducereinheit, vorzugsweise mit mehreren Transducerelementen, eine Länge in Y-Richtung aufweist, wobei nach mehreren linienförmigen Abrasterungen in X-Richtung durch die Transducereinheit die Transducereinheit in Y-Richtung mit einer Versetzschrittweite, die der Länge der Transducereinheit entspricht, versetzt wird, wobei die jeweiligen Abstände der durchgeführten mehreren linienförmigen Abrasterungen vor der Versetzung der Transducereinheit in Y-Richtung mit der Versetzschrittweite, die der Länge der Transducereinheit entspricht, einem natürlichen Bruchteil der Länge der Transducereinheit (Länge der Transducereinheit / t, t ≥ 2, 3, 4, ...) entsprechen.

Ferner ist ein Verfahren gemäß einer Weiterbildung vorgesehen, dass die Transducereinheit mehrere in Y-Richtung, vorzugsweise nebeneinander und/oder linear, angeordnete Transducerelemente aufweist, wobei die Transducerelemente jeweils eine, vorzugsweise konstante, Breite in Y-Richtung aufweisen, wobei mehrere linienförmige p (p ≥ 2, 3, 4, ...) Abrasterungen in X-Richtung durchgeführt werden, wobei die Abstände der linienförmigen p (p ≥ 2, 3, 4, ...) Abrasterungen einem Bruchteil der Breite der Transducerelemente (Breite der Transducerelemente / p, p ≥ 2, 3, 4, ...) entsprechen, und nach der Durchführung der linienförmigen p (p ≥ 2, 3, 4, ...) Abrasterungen die Transducereinheit in Y-Richtung mit der Versetzschrittweite, die einem Vielfachen der Breite der Transducerelemente entspricht, versetzt wird.

Bevorzugt ist bei einer Ausgestaltung des Verfahrens, dass die, insbesondere große, Versetzschrittweite der Transducereinheit in Y-Richtung nach der Durchführung der mehreren linienförmigen Abrasterungen durch die Transducereinheit um einen Toleranzkorrekturwert berichtigt wird, wobei insbesondere der Toleranzkorrekturwert derart gebildet ist, dass der Abstand in Y-Richtung der letzten linienförmigen Abrasterung vor der Versetzung der Transducereinheit um die große Versetzschrittweite zur ersten linienförmigen Abrasterung nach der Versetzung der Transducereinheit um die große Versetzschrittweite dem Abstand der mehreren linienförmigen Abrasterungen vor und/oder nach der Versetzung der Transducereinheit um die große Versetzschrittweite in Y-Richtung entspricht oder wobei insbesondere der Toleranzkorrekturwert derart gebildet ist, dass der Abstand zwischen allen linienförmigen Abrasterungen durch die Transducereinheit konstant ist.

Insbesondere weist die Transducereinheit mehrere Transducerelemente auf, wobei die Transducerelemente parallel betrieben werden. Vorzugsweise werden die Pulserzeuger für jedes Transducerelement und/oder die Empfangsvorrichtungen für jedes Transducerelement parallel betrieben. Alternativ erfolgt in einer Ausgestaltung ein Pulsbetrieb mit einem zeitlichen Versatz der Gesamtabklingzeit für die Transducersignale, wobei ein Übersprechen der einzelnen Transducerelemente minimiert ist und/oder die durch Schallwellen verursachten Signale eines Transducerelements nicht benachbarte Transducerelemente stören.

Im Rahmen der Erfindung ist es möglich, dass für die Durchführung des Verfahrens eine Transducereinheit mit mehreren Transducerelementen mit einer kompakten Bauweise mit voneinander getrennten Transducerelementen oder mit einem monolithischen Block für die Transducerelemente bereitgestellt wird.

Weiterhin ist bei dem Verfahren in einer Ausgestaltung vorgesehen, dass mittels eines Transducerelements der Abstand zwischen der Transducereinheit und der Oberfläche der Probe kontrolliert wird. Alternativ ist eine Abstandkontrolle zwischen der Transducereinheit und der Probe mittels eines gewichteten Werts, beispielsweise unter Verwendung eines entsprechenden Algorithmus, der verschiedenen Transducerelemente realisierbar.

Für die Durchführung des Verfahren ist eine Transducereinheit für ein akustisches Rastermikroskop, insbesondere Ultraschallrastermikroskop, mit mehreren jeweils einen Transducer und eine, vorzugsweise akustische, Linse aufweisenden Transducerelementen vorgesehen, wobei wenigstens zwei Transducerelemente unterschiedliche Fokallängen aufweisen.

Bei einer Verwendung der Transducereinheit in einem akustischen Rastermikroskop erfolgen in einem, vorzugweise einzigen, Rasterverfahren gleichzeitig mehrere linienförmige Abrasterungen, wobei die Abrasterungen aufgrund der unterschiedlichen Fokallängen der Transducerelemente der Transducereinheit in verschiedenen Ebenen der Probe gleichzeitig erfolgen. Somit werden verschiedene Scanfelder der zu untersuchenden Probe in unterschiedlichen Ebenen der Probe bei einem Rastervorgang erhalten.

Die einzelnen Transducerelemente weisen neben einem Transducer zu Erzeugung eines Schallsignals und einer akustischen Linse zur Fokussierung weiterhin einen Pulsgeber, einen Sende-/Empfangsschalter, einen Empfänger zum Empfang der von der Probe reflektierten oder transmittierten Schallsignale und einen A/D-Wandler zur Wandlung der empfangenen Schallsignale in digitale Werte zur Darstellung von (Grauwert-)Bildern auf. Die von der Probe reflektierten oder transmittierten Ultraschallsignale werden zur Erzeugung des Bildes gemessen und gewandelt. Zusätzlich können die Laufzeiten der Signale oder ihre Phasenschiebungen als weitere Bildinformationen gewonnen werden. Bei einem Rasterverfahren wird die Probe Pixel für Pixel und Zeile für Zeile abgerastert. Hierbei werden die Transducereinheit oder die Transducerelemente relativ zur zu untersuchende Probe bewegt.

Dazu ist in einer bevorzugten Weiterbildung der Transducereinheit vorgesehen, dass, vorzugsweise ausschließlich, zwei Transducerelemente mit unterschiedlichen Fokallängen bezogen auf eine X-Y-Ebene in einer linearen Anordnung in Y-Richtung nebeneinander oder in X-Richtung hintereinander angeordnet sind oder dass, vorzugsweise ausschließlich, zwei Transducerelemente mit unterschiedlichen Fokallängen bezogen auf eine X-Y-Ebene in X-Richtung und in Y-Richtung, insbesondere diagonal, versetzt zueinander angeordnet sind.

Außerdem zeichnet sich eine weitere Ausgestaltung der Transducereinheit dadurch aus, dass die Transducereinheit mehrere Transducerelemente jeweils mit einer ersten Fokallänge und mehrere Transducerelemente jeweils mit einer zweiten Fokallänge, die sich von der ersten Fokallänge unterscheidet, bezogen auf eine X-Y-Ebene aufweist,
wobei ein Array von in Y-Richtung nebeneinander, insbesondere linear, angeordneten Transducerelementen mit der ersten Fokallänge und ein Array von in Y-Richtung nebeneinander, insbesondere linear, angeordneten Transducerelementen mit der zweiten Fokallänge hintereinander in X-Richtung angeordnet sind
oder wobei ein Array von in Y-Richtung nebeneinander, insbesondere linear, angeordneten Transducerelementen mit der ersten Fokallänge und ein Array von in Y-Richtung nebeneinander, insbesondere linear, angeordneten Transducerelementen mit der zweiten Fokallänge in X-Richtung und in Y-Richtung, insbesondere diagonal, versetzt zueinander angeordnet sind
oder wobei in einer alternierenden Reihenfolge in Y-Richtung Transducerelemente mit der ersten Fokallänge und Transducerelemente mit der zweiten Fokallänge, insbesondere linear, hintereinander angeordnet sind.

Die Transducereinheit weist gemäß einer vorteilhaften Weiterbildung insbesondere mehr als zwei Transducerelemente jeweils mit einer ersten Fokallänge und mehr als zwei Transducerelemente jeweils mit einer zweiten Fokallänge auf. Durch die, insbesondere parallele oder gleichzeitige, Verwendung von mehreren Arrays mit mehreren Transducerelementen für ein akustisches Mikroskop, insbesondere mit mehr als zwei Transducerelementen einer ersten Fokallänge und mit mehr als zwei Transducerelementen einer zweiten Fokallänge, werden die Anwendungsmöglichkeiten des akustischen Mikroskops erhöht, da in einem Untersuchungsvorgang einer Probe mittels der Transducerelemente mit den unterschiedlichen Fokallängen gleichzeitig mehrere Aufnahmen bzw. Bilder in jeweils unterschiedlichen Ebene erhalten werden. Durch die Arrays wird zudem die Zeit für eine Untersuchung im Rasterverfahren verkürzt, da mehrere Transducerelemente einer Fokallänge die Probe über eine größere Breite in Y-Richtung oder ein breiteres Scanfeld abrastern.

Ferner wird die Aufgabe gelöst durch ein akustisches Rastermikroskop, insbesondere Ultraschallrastermikroskop, wobei das akustisches Rastermikroskop einer Transducereinheit, wie voranstehend beschrieben, ausgebildet ist oder das akustisches Rastermikroskop eingerichtet ist, das voranstehende beschriebene Verfahren zum Betrieb eines akustischen Mikroskops, insbesondere nach einem der Ansprüche 1 bis 11, auszuführen. Zur Vermeidung von Wiederholungen wird ausdrücklich auf die obigen Ausführungen verwiesen.

Im Übrigen ist im Rahmen der Erfindung als eigenständiger Erfindungsgegenstand ein Verfahren zum Betreiben eines akustischen Rastermikroskops, insbesondere Ultraschallrastermikroskops, vorgesehen, wobei mittels einer voranstehend beschriebenen Transducereinheit, insbesondere mit einem oder mehreren jeweils einen Transducer und eine Linse aufweisenden Transducerelementen, eine Probe in einer X-Y-Ebene abgerastert wird, wobei zu einer linienförmigen Abrasterung der Probe die Transducereinheit in X-Richtung bewegt wird, wobei nach der oder einer linienförmigen Abrasterung der Probe in X-Richtung durch die Transducereinheit die Transducereinheit in Y-Richtung um eine konstante Versetzschrittweite in Y-Richtung versetzt wird, wobei insbesondere nach der Versetzung der Transducereinheit in Y-Richtung wenigstens eine weitere linienförmige Abrasterung der Probe mittels der Transducereinheit in Y-Richtung durchgeführt wird.

Dabei ist vorgesehen, dass die zu untersuchende Probe im Rasterverfahren mit einer konstanten Versetzschrittweite in Y-Richtung nach jeder zeilenförmigen Abrasterung in X-Richtung durch die Transducereinheit versetzt wird. Vorzugweise weist die Transducereinheit mehrere Transducerelemente auf, wobei die Transducerelemente parallel betrieben werden. Insbesondere wird gemäß einem weiteren Aspekt die Transducereinheit in einem mäanderförmigen Verlauf in der X-Y-Ebene relativ zur Probe bewegt.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens, welcher durch die angefügten Patentansprüche verkörpert wird, anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a, 1b: schematisch jeweils perspektivische Querschnittsansichten von Transducereinheiten für ein akustisches Mikroskop;
- Fig. 2a, 2b: schematisch jeweils perspektivische Querschnittsansichten von weiteren Transducereinheiten für ein akustisches Mikroskop;
- Fig. 3: schematisch ein einzelnes Scanfeld einer Transducereinheit eines akustischen Mikroskops zur Untersuchung einer Probe;
- Fig. 4: schematisch ein gesamtes Scanfeld einer Transducereinheit eines akustischen Mikroskops zur Untersuchung einer Probe;
- Fig. 5: eine schematische Darstellung eines mäanderförmigen Scanverlaufs einer Transducereinheit über eine Probenoberfläche im Ausschnitt und
- Fig. 6: schematisch die Scanfelder für eine weitere Transducereinheit.

In den Zeichnungen sind jeweils gleiche oder gleichartige Elemente und/oder Teile mit denselben Bezugsziffern versehen, so dass von einer erneuten Vorstellung jeweils abgesehen wird.

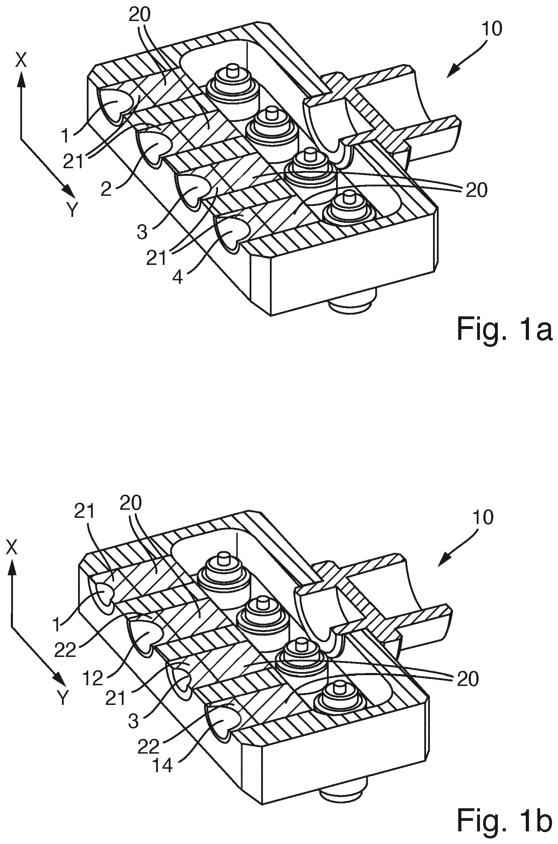

Fig. 1a und Fig. 1b zeigen jeweils in schematisch perspektivische Ansichten von Transducereinheiten 10 für ein akustisches Mikroskop, insbesondere Ultraschallrastermikroskop, im Querschnitt.

Die Transducereinheit 10 in Fig. 1a weist in Y-Richtung, d.h. senkrecht zur Scanrichtung der Transducereinheit 10 in X-Richtung, in einer linearen Anordnung nebeneinander angeordnete Transducerelemente 1, 2, 3, 4, die alle die gleiche Fokallänge aufweisen. Die Transducerelemente 1, 2, 3, 4 sind baugleich und weisen jeweils einen Transducer 20 und eine am Transducer 20 angeordnete akustische Linse 21 zur Fokussierung der Ultraschallsignale auf eine zu untersuchende Probe auf.

Bei dem Ausführungsbeispiel in Fig. 1b weist die Transducereinheit 10 in einer linearen Anordnung in Y-Richtung in einer alternierenden Reihenfolge Transducerelemente 1, 12, 3 und 14 auf. Die Transducerelemente 1 und 3 haben jeweils eine (erste) Fokallänge und die Transducerelemente 12 und 14 haben eine (zweite) Fokallänge, wobei sich die Fokallänge der Transducerelemente 1 und 3 und die Fokallänge der Transducerelemente 12 und 14 sich unterscheiden. Die Transducerelemente 12 und 14 haben hierbei eine Linse 22, deren Fokallänge verschieden von der Fokallänge der Linse 21 für die Transducerelemente 1 und 3 ist.

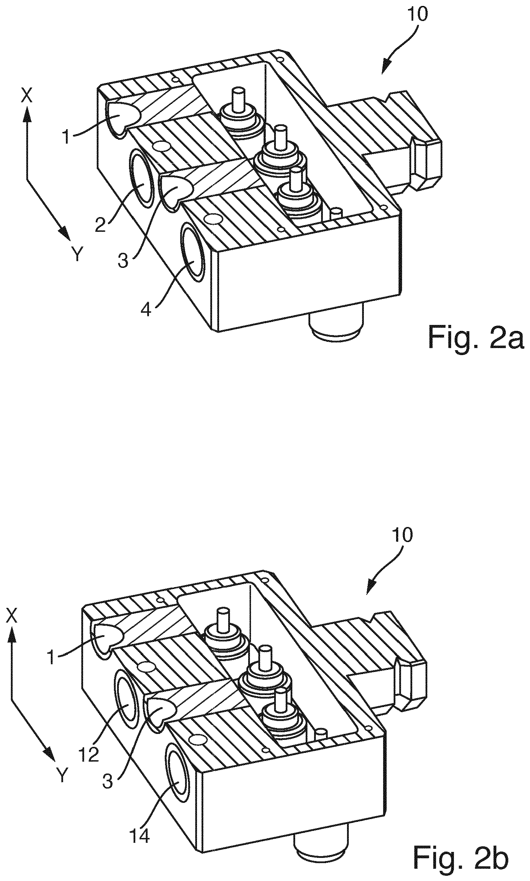

In Fig. 2a und Fig. 2b sind jeweils in schematisch perspektivische Ansichten von Transducereinheiten 10 gemäß anderen Ausgestaltungen für ein akustisches Mikroskop, insbesondere Ultraschallrastermikroskop, im Querschnitt gezeigt.

Die Ausführungen der weiteren Transducereinheiten 10 gemäß Fig. 2a sowie Fig. 2b unterscheiden sich von den Ausgestaltungen der Transducereinheiten 10 gemäß Fig. 1a sowie Fig. 1b in der Anordnung der Transducerelemente.

Bei der Ausgestaltung der Transducereinheit 10 gemäß Fig. 2a sind gegenüber der Transducereinheit 10 in Fig. 1a die Transducerelemente 1 und 3 in X-Richtung zu den Transducerelementen 2 und 4 versetzt. Die Transducerelemente 1, 2, 3 und 4 weisen jeweils die gleiche Fokallänge auf.

Bei der Ausgestaltung der Transducereinheit 10 gemäß Fig. 2b sind gegenüber der Transducereinheit 10 in Fig. 1b die Transducerelemente 1 und 3 in X-Richtung zu den Transducerelementen 12 und 14 versetzt. Die Transducerelemente 1 und 3 weisen jeweils die gleiche Fokallänge auf, die sich von der Fokallänge der Transducerelemente 12 und 14 unterscheidet.

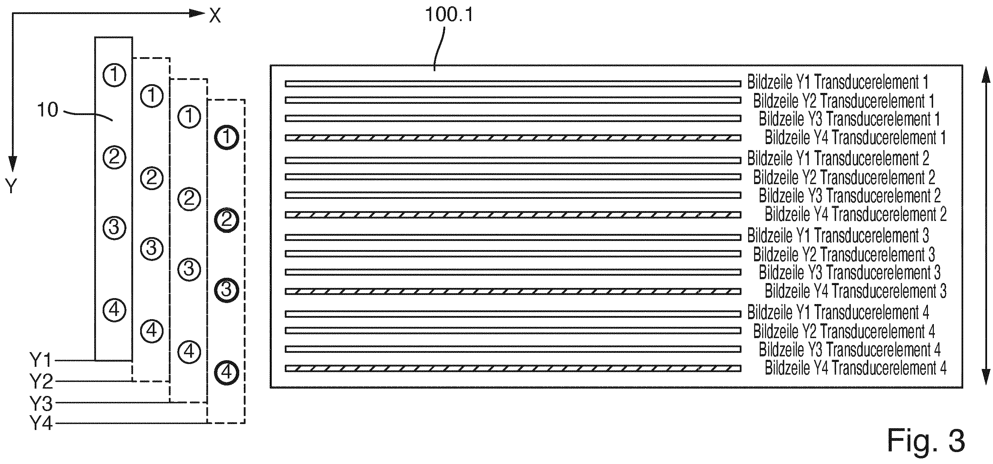

In Fig. 3 ist ein einzelnes erstes Scanfeld 100.1 der Transducereinheit 10 gemäß der Ausgestaltung von Fig. 1a mit Transducerelementen 1, 2, 3, 4, die die gleiche Fokallänge aufweisen, für eine zu untersuchende Probe schematisch gezeigt. Mittels der Transducerelemente 1, 2, 3, 4 in der Y-Position Y1 werden in einer linienförmigen Abrasterung der Probe als Darstellung z.B. auf einem Monitor die Bildzeilen Y1-Transducerelement 1, Y1-Transducerelement 2, Y1-Transducerelement 3, Y1-Transducerelement 4 entsprechend den empfangenden reflektierten Signalen für die Transducerelemente 1, 2, 3, 4 von der Probe bei einer Abrasterung in X-Richtung gleichzeitig erhalten.

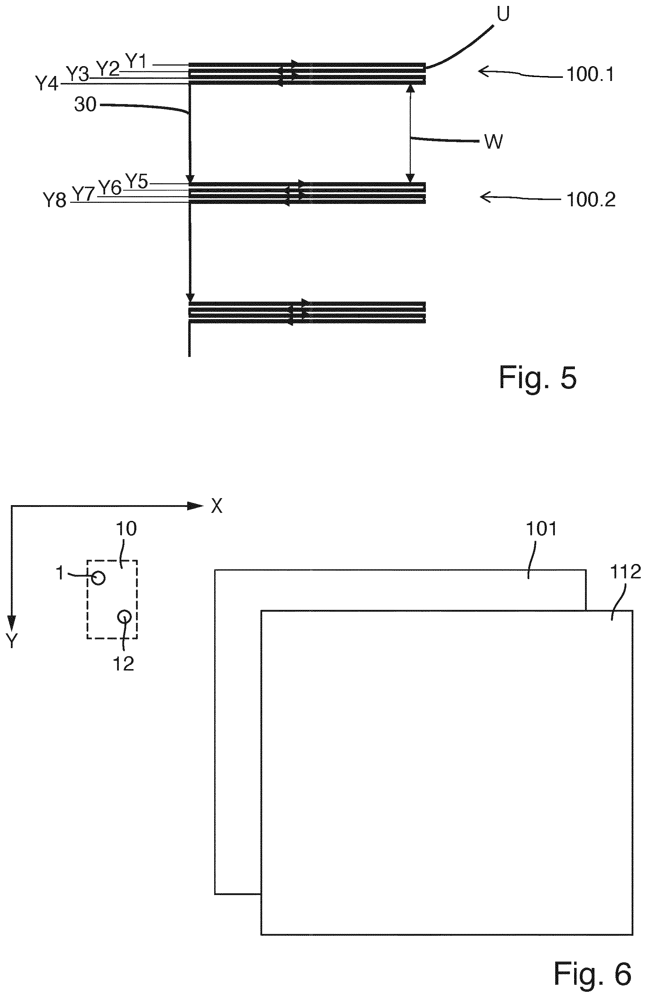

Anschließend wird in einer Endposition die Transducereinheit 10 von der Y-Position Y1 zur Y-Position Y2 um eine kleine Versetzschrittweite U in Y-Richtung (vgl. Fig. 5) bewegt, so dass in einer linienförmigen Abrasterung der Probe die Bildzeilen Y2-Transducerelement 1, Y2-Transducerelement 2, Y2 Transducerelement 3, Y2-Transducerelement 4 von der Probe erhalten werden. Danach wird die Transducereinheit 10 von der Y-Position Y2 zur Y-Position Y3 um eine kleine Versetzschrittweite U (vgl. Fig. 5) bewegt, wobei anschließend mittels der Transducerelemente 1, 2, 3, 4 die Bildzeilen Y3-Transducerelement 1, Y3-Transducerelement 2, Y3 Transducerelement 3, Y3-Transducerelement 4 erhalten werden. In analoger Weise wird die Transducereinheit 10 von der Y-Position Y3 zur Y-Position Y4 um eine kleine Versetzschrittweite U in Y-Richtung (vgl. Fig. 5) weiterbewegt, um danach in einer linienförmigen Abrasterung in X-Richtung gleichzeitig die Bildzeilen Y4-Transducerelement 1, Y4-Transducerelement 2, Y4 Transducerelement 3, Y4-Transducerelement 4 zu erhalten.

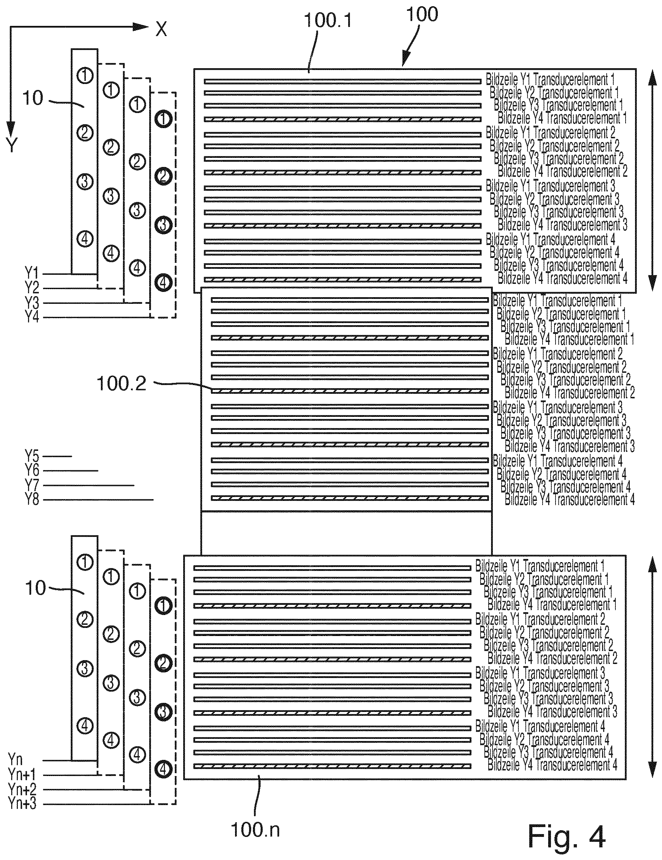

In Fig. 4 ist schematisch ein Gesamtscanfeld 100 der Transducereinheit 10 eines akustischen Mikroskops zur Untersuchung einer Probe illustriert. Nach der Erfassung des gesamten Scanfelds 100.1 mit vier linienförmigen Abrasterungen in X-Richtung, wie anhand von Fig. 3 gezeigt, wird die Transducereinheit 10 um eine Versetzschrittweite W (vgl. Fig. 5) in Y-Richtung versetzt, die größer ist als die Versetzschrittweite U (vgl. Fig. 5) zwischen den Y-Positionen Y1, Y2, Y3, Y4. Insbesondere entspricht die Versetzschrittweite W der Transducereinheit 10 in Y-Richtung der Länge, die sich aus dem Produkt des äquidistanten Abstands U der linienförmigen Abrasterungen mit der Anzahl der linienförmigen m (im vorliegenden Fall m = 4) Abrasterungen und der Anzahl der (im vorliegenden beispielhaften Fall: vier) Transducerelemente der Transducereinheit 10 in Y-Richtung entspricht.

In einer anderen Ausgestaltung entsprechen die Y-Abstände der linienförmigen vier Abrasterungen in den Positionen Y1, Y2, Y3 und Y4 einem Bruchteil der Breite der Transducerelemente 1, 2, 3, 4, wobei nach der Durchführung der linienförmigen vier Abrasterungen in X-Richtung die Transducereinheit in Y-Richtung mit der Versetzschrittweite, die einem Vielfachen der Breite der Transducerelemente entspricht, versetzt wird.

Nach dem Erfassen und der vollständigen Darstellung des Scanfelds 100.1 wird die Transducereinheit 10, wie in Fig. 3 beschrieben, und nach einem Versatz in Y-Richtung um eine große Versetzschrittweite W (vgl. Fig. 5) von der Y-Position Y4 zu der Y-Position Y5 für die Erfassung eines nachfolgenden Scanfeldes 100.2 bewegt, wobei anschließend die Transducereinheit 10 von der Y-Position Y5 zu den weiteren Y-Positionen Y6, Y7 und Y8 mäanderförmig in dem Rasterverfahren zur Erfassung eines Scanfeldes 100.2 bewegt wird, um mittels der Transducerelemente 1, 2, 3, 4 durch linienförmige Abrasterungen der Probe die jeweiligen Bildzeilen für die vier Y-Positionen Y5, Y6, Y7 und Y8 zu erzeugen. Diese Verfahrensschritte zwischen den einzelnen Y-Positionen der Transducereinheit 10 und zwischen zwei aufeinanderfolgenden Scanfelder wird mehrfach in entsprechender Weise wiederholt, bis das letzte Scanfeld 100.n für die Y-Positionen Yn, Yn+1, Yn+2, Yn+3 mittels der Transducerelemente 1, 2, 3, 4 abgerastet ist und die entsprechenden Bildzeilen erzeugt sind.

Im Rahmen der Erfindung ist es möglich, anstelle der Transducereinheit 10 aus Fig. 1a eine Transducereinheit 10 gemäß den schematischen Ausgestaltungen nach Fig. 1b oder Fig. 2a oder Fig. 2b oder eine andere Transducereinheit mit mehreren Transducerelementen, die in einer vorbestimmen Anordnung in X-Richtung und/oder in Y-Richtung angeordnet sind und/oder verschiedene Fokallängen aufweisen, für die Erfassung eines Gesamtscanfeldes 100 zu verwenden, wobei die Transducereinheiten 10 jeweils nach einem, insbesondere mäanderförmigen, Rasterverfahren mit unterschiedlichen Versetzschrittweiten in Y-Richtung während des Rasterverfahrens bewegt werden.

Fig. 5 zeigt im Ausschnitt eine schematische Darstellung des Scanverlaufs der Transducereinheit 10 (vgl. Fig. 4) mit den vier Transducerelementen 1, 2, 3, 4 über einen Ausschnitt einer Probenfläche der Probe. Für die Erfassung der Scanfelder 100.1 und 100.2 wird die Transducereinheit 10 zwischen den mehreren Y-Positionen Y1, Y2, Y3, Y4 bzw. Y5, Y6, Y7, Y8 des jeweiligen Scanfelds 100.1 bzw. 100.2 um die (kleine) Versetzschrittweite U jeweils in Y-Richtung und nach Erfassung eines Scanfelds 100.1 oder 100.2 um die Versetzschrittweite W, die größer ist als die Versetzschrittweite U, bewegt.

Die Bewegung der Transducereinheit 10 erfolgt in Form eines Mäanders 30, wodurch die Probe mäanderförmig abgescannt wird. Dabei wird die Y-Schrittweite des Mäanders 30 für die Transducereinheit 10 in Y-Richtung zur Erfassung des Geamtscanfeldes 100 mit den Versetzschrittweiten U und W variiert.

In dem Ausführungsbeispiel von Fig. 6 ist schematisch eine Transducereinheit 10 mit zwei Transducerelementen 1 und 12 sowie die Gesamtscanfelder 101 und 112 für die beiden Transducerelemente 1 und 12 gezeigt. Die Transducerelemente 1 und 12 weisen bei dieser Ausgestaltung unterschiedliche Fokallängen auf.

Wie aus Fig. 6 ersichtlich, sind die Transducerelemente 1 und 12 in X-Richtung und in Y-Richtung diagonal versetzt an der Transducereinheit 10 angeordnet, wodurch entsprechend bei einer Abrasterung einer Probe das Gesamtscanfeld 101 für das Transducerelement 1 und das Gesamtscanfeld 112 für das Transducerelement 12 ebenfalls mit Versatz in X-Richtung und in Y-Richtung ausgebildet sind. Dementsprechend werden die erzeugten Gesamtscanbilder 101, 102, die mit den Transducerelementen 1 und 12 erhalten werden, mit einem Versatz dargestellt. In einer Ausgestaltung wird die Transducereinheit 10 mäanderförmig über die Probe für eine linienförmige Abrasterung mittels der Transducerelemente 1 und 12 bewegt, wobei die Y-Schrittweite zwischen zwei linienförmigen Abrasterungen konstant ist.

In einer weiteren (hier nicht dargestellten) Ausgestaltung wird anstelle der in Fig. 6 dargestellten Transducereinheit 10 beispielweise die in Fig. 2b gezeigte Transducereinheit 10 für die Erfassung der Gesamtscanfelder 101 und 112 verwendet, wobei die Transducereinheit 10 jeweils nach einem, insbesondere mäanderförmigen, Rasterverfahren mit unterschiedlichen Versetzschritten in Y-Richtung bewegt wird. Auch sind andere Ausgestaltungen des Rasterverfahrens unter Verwendung von Transducereinheiten mit mehreren Transducerelementen, die unterschiedliche Fokallängen aufweisen, realisierbar, wobei die Transducereinheiten nach, insbesondere mäanderförmigen, Rasterverfahren mit unterschiedlichen Versetzschrittweiten in Y-Richtung während der Erfassung eines Gesamtscanfeldes bewegt werden.

### Bezugszeichenliste

- 1, 2, 3, 4: Transducerelement
- 10: Transducereinheit
- 12, 14: Transducerelement
- 20: Transducer
- 21, 22: Linse
- 30: Mäander
- 100: Gesamtscanfeld
- 101: Gesamtscanfeld
- 100.1, 100.2, ..., 100.n: Scanfeld
- 112: Gesamtscanfeld

- U: Versetzschrittweite
- W: Versetzschrittweite

## Patentansprüche

1. Verfahren zum Betreiben eines akustischen Rastermikroskops, insbesondere Ultraschallrastermikroskops, wobei mittels einer Transducereinheit (10), insbesondere mit einem oder mehreren jeweils einen Transducer (20) und eine Linse (21, 22) aufweisenden Transducerelementen (1, 2, 3, 4, 12, 14), eine Probe in einer X-Y-Ebene abgerastert wird, wobei zu einer linienförmigen Abrasterung der Probe die Transducereinheit (10) in X-Richtung bewegt wird, wobei nach der oder einer linienförmigen Abrasterung der Probe durch die Transducereinheit (10) die Transducereinheit (10) in Y-Richtung um eine Versetzschrittweite versetzt wird **dadurch gekennzeichnet, dass** während einer Untersuchung der Probe mittels des Rasterverfahrens für die Abrasterung der Probe die Größe der Versetzschrittweite der Transducereinheit (10) in Y-Richtung variiert wird, wobei insbesondere nach der Versetzung der Transducereinheit (10) in Y-Richtung wenigstens eine weitere linienförmige Abrasterung der Probe mittels der Transducereinheit (10) in Y-Richtung durchgeführt wird.

2. Verfahren nach Anspruch 1, **dadurch gekennzeichnet, dass** mehrere linienförmigen Abrasterungen der Probe durch die Transducereinheit (10) durchgeführt werden, wobei die Transducereinheit (10) nach jeweils einer linienförmigen Abrasterung der Probe jeweils um eine kleine, vorzugsweise konstante, Versetzschrittweite (U) in Y-Richtung versetzt wird und nach einer vorbestimmten Anzahl n (n ≥ 2, 3, ...) von mehreren linienförmigen Abrasterungen der Probe die Transducereinheit (10) um eine große, vorzugsweise konstante, Versetzschrittweite (W), die größer als die kleine Versetzschrittweite (U) ist, in Y-Richtung versetzt wird und/oder dass nach einer linienförmigen Abrasterung der Probe die Transducereinheit (10) um eine große, vorzugsweise konstante, Versetzschrittweit in Y-Richtung versetzt wird und nach der Versetzung der Transducereinheit (10) um die große Versetzschrittweite (W) mehrere n (n ≥ 2, 3, ...) linienförmige Abrasterungen der Probe durch die Transducereinheit (10) erfolgen, wobei nach jeder der mehreren linienförmigen n (n ≥ 2, 3, ...) Abrasterungen der Probe die Transducereinheit (10) jeweils um eine kleine, vorzugsweise konstante, Versetzschrittweite (U) in Y-Richtung, die kleiner als die große Versetzschrittweite (W) ist, versetzt wird.

3. Verfahren nach Anspruch 1 oder 2, **dadurch gekennzeichnet, dass** die Transducereinheit (10) in einem mäanderförmigen Verlauf in der X-Y-Ebene relativ zur Probe bewegt wird.

4. Verfahren nach einem der Ansprüche 1 bis 3, **dadurch gekennzeichnet, dass**
a.) die Probe unter Verwendung einer Transducereinheit (10) für ein akustisches Rastermikroskop, insbesondere Ultraschallrastermikroskop, mit mehreren jeweils einen Transducer (20) und eine Linse (21, 22) aufweisenden Transducerelementen (1, 2, 3, 4, 12, 14), wobei wenigstens zwei Transducerelemente (1, 2, 3, 4, 12, 14) unterschiedliche Fokallängen aufweisen, abgerastert wird oder
b.) dass die Probe unter Verwendung einer Transducereinheit (10) mit mehreren jeweils einen Transducer (20) und eine Linse (21, 22) aufweisenden Transducerelementen (1, 2, 3, 4, 12, 14) abgerastert wird, wobei insbesondere die Transducerelemente (1, 2, 3, 4, 12, 14) die gleiche Fokallänge aufweisen und/oder die Transducerelemente (1, 2, 3, 4, 12, 14) in einer linearen oder rautenförmigen Anordnung in Y-Richtung nebeneinander angeordnet sind.

5. Verfahren nach einem der Ansprüche 1 bis 4, **dadurch gekennzeichnet, dass** die Transducereinheit (10) mehrere in Y-Richtung, vorzugsweise hintereinander und/oder linear, angeordnete Transducerelemente (1, 2, 3, 4, 12, 14) aufweist, wobei mehrere linienförmige m (m ≥ 2, 3, 4, ...) Abrasterungen in X-Richtung mittels der jeweiligen Transducerelemente (1, 2, 3, 4, 12, 14) durchgeführt werden, wobei die Abstände der linienförmigen m (m ≥ 2, 3, 4, ...) Abrasterungen durch die jeweiligen Transducerelemente (1, 2, 3, 4, 12, 14) in Y-Richtung äquidistant sind und nach der Durchführung der linienförmigen m (m ≥ 2, 3, 4, ...) Abrasterungen durch die Transducereinheit (10) die Transducereinheit (10) in Y-Richtung mit der Versetzschrittweite, die dem Produkt des äquidistanten Abstands der linienförmigen Abrasterungen mit der Anzahl der linienförmigen m (m ≥ 2, 3, 4, ...) Abrasterungen und der Anzahl der Transducerelemente (1, 2, 3, 4, 12, 14) der Transducereinheit (10) in Y-Richtung entspricht, versetzt wird.

6. Verfahren nach einem der Ansprüche 1 bis 5, **dadurch gekennzeichnet, dass** die Transducereinheit (10), vorzugsweise mit mehreren Transducerelementen (1, 2, 3, 4, 12, 14), eine Länge in Y-Richtung aufweist, wobei nach mehreren linienförmigen Abrasterungen in X-Richtung durch die Transducereinheit (10) die Transducereinheit (10) in Y-Richtung mit einer Versetzschrittweite, die der Länge der Transducereinheit (10) entspricht, versetzt wird, wobei die jeweiligen Abstände der durchgeführten mehreren linienförmigen Abrasterungen vor der Versetzung der Transducereinheit (10) in Y-Richtung mit der Versetzschrittweite, die der Länge der Transducereinheit (10) entspricht, einem natürlichen Bruchteil der Länge der Transducereinheit (10) (Länge der Transducereinheit (10) / t, t ≥ 2, 3, 4, ...) entsprechen.

7. Verfahren nach einem der Ansprüche 1 bis 5, **dadurch gekennzeichnet, dass** die Transducereinheit (10) mehrere in Y-Richtung, vorzugsweise nebeneinander und/oder linear, angeordnete Transducerelemente (1, 2, 3, 4, 12, 14) aufweist, wobei die Transducerelemente (1, 2, 3, 4, 12, 14) jeweils eine, vorzugsweise konstante, Breite in Y-Richtung aufweisen, wobei mehrere linienförmige p (p ≥ 2, 3, 4, ...) Abrasterungen in X-Richtung durchgeführt werden, wobei die Abstände der linienförmigen p (p ≥ 2, 3, 4, ...) Abrasterungen einem Bruchteil der Breite der Transducerelemente (1, 2, 3, 4, 12, 14) (Breite der Transducerelemente (1, 2, 3, 4, 12, 14) / p, p ≥ 2, 3, 4, ...) entsprechen, und nach der Durchführung der linienförmigen p (p ≥ 2, 3, 4, ...) Abrasterungen die Transducereinheit (10) in Y-Richtung mit der Versetzschrittweite, die einem Vielfachen der Breite der Transducerelemente (1, 2, 3, 4, 12, 14) entspricht, versetzt wird.

8. Verfahren nach einem der Ansprüche 5 bis 7, **dadurch gekennzeichnet, dass** die, insbesondere große, Versetzschrittweite (W) der Transducereinheit (10) in Y-Richtung nach der Durchführung der mehreren linienförmigen Abrasterungen durch die Transducereinheit (10) um einen Toleranzkorrekturwert berichtigt wird, wobei insbesondere der Toleranzkorrekturwert derart gebildet ist, dass der Abstand in Y-Richtung der letzten linienförmigen Abrasterung vor der Versetzung der Transducereinheit (10) um die große Versetzschrittweite (W) zur ersten linienförmigen Abrasterung nach der Versetzung der Transducereinheit (10) um die große Versetzschrittweite (W) dem Abstand der mehreren linienförmigen Abrasterungen vor und/oder nach der Versetzung der Transducereinheit (10) um die große Versetzschrittweite (W) in Y-Richtung entspricht oder wobei insbesondere der Toleranzkorrekturwert derart gebildet ist, dass der Abstand zwischen allen linienförmigen Abrasterungen durch die Transducereinheit (10) konstant ist.

9. Verfahren nach einem der Ansprüche 1 bis 8, **dadurch gekennzeichnet, dass** die Transducereinheit (10) mehrere Transducerelemente (1, 2, 3, 4, 12, 14) aufweist, wobei die Transducerelemente (1, 2, 3, 4, 12, 14) parallel betrieben werden.

10. Verfahren nach einem der Ansprüche 4 bis 9, **dadurch gekennzeichnet, dass**, insbesondere im Fall a.), vorzugsweise ausschließlich, zwei Transducerelemente (1, 2, 3, 4, 12, 14) mit unterschiedlichen Fokallängen bezogen auf eine X-Y-Ebene in einer linearen Anordnung in Y-Richtung nebeneinander oder in X-Richtung hintereinander angeordnet sind oder dass, vorzugsweise ausschließlich, zwei Transducerelemente (1, 2, 3, 4, 12, 14) mit unterschiedlichen Fokallängen bezogen auf eine X-Y-Ebene in X-Richtung und in Y-Richtung, insbesondere diagonal, versetzt zueinander angeordnet sind.

11. Verfahren nach einem der Ansprüche 4 bis 10, **dadurch gekennzeichnet, dass**, insbesondere im Fall a.), die Transducereinheit (10) mehrere Transducerelemente (1, 2, 3, 4, 12, 14) jeweils mit einer ersten Fokallänge und mehrere Transducerelemente (1, 2, 3, 4, 12, 14) jeweils mit einer zweiten Fokallänge, die sich von der ersten Fokallänge unterscheidet, bezogen auf eine X-Y-Ebene aufweist,
wobei ein Array von in Y-Richtung nebeneinander, insbesondere linear, angeordneten Transducerelementen (1, 2, 3, 4, 12, 14) mit der ersten Fokallänge und ein Array von in Y-Richtung nebeneinander, insbesondere linear, angeordneten Transducerelementen (1, 2, 3, 4, 12, 14) mit der zweiten Fokallänge hintereinander in X-Richtung angeordnet sind
oder wobei ein Array von in Y-Richtung nebeneinander, insbesondere linear, angeordneten Transducerelementen (1, 2, 3, 4, 12, 14) mit der ersten Fokallänge und ein Array von in Y-Richtung nebeneinander, insbesondere linear, angeordneten Transducerelementen (1, 2, 3, 4, 12, 14) mit der zweiten Fokallänge in X-Richtung und in Y-Richtung, insbesondere diagonal, versetzt zueinander angeordnet sind
oder wobei in einer alternierenden Reihenfolge in Y-Richtung Transducerelemente (1, 2, 3, 4, 12, 14) mit der ersten Fokallänge und Transducerelemente (1, 2, 3, 4, 12, 14) mit der zweiten Fokallänge, insbesondere linear, hintereinander angeordnet sind.

12. Akustisches Rastermikroskop, insbesondere Ultraschallrastermikroskop, umfassend eine Transducereinheit zur Abrasterung einer Probe in einer X-Y-Ebene und Mittel, um die Transducereinheit in die X-Richtung zu bewegen, und Mittel, um die Transducereinheit in die Y-Richtung zu versetzen, **dadurch gekennzeichnet, dass** das akustisches Rastermikroskop eingerichtet ist, das Verfahren nach einem der Ansprüche 1 bis 11 auszuführen.

## Claims

1. A method for operating a scanning acoustic microscope, in particular an ultrasonic scanning microscope, wherein a sample is scanned in an X-Y plane by means of a transducer unit (10), in particular with one or more transducer elements (1, 2, 3, 4, 12, 14) comprising respectively one transducer and one lens, wherein the transducer unit (10) is moved in the X direction for a linear scanning of the sample, wherein, after the or a linear scanning of the sample by the transducer unit (10), the transducer unit (10) is displaced in the Y direction by a displacement increment, **characterized in that** during an examination of the sample by means of the scanning method the size of the displacement increment of the transducer unit (10) in the Y direction is varied for the scanning of the sample, wherein, in particular after the displacement of the transducer unit (10) in the Y direction, at least one further linear scanning of the sample is performed by means of the transducer unit (10) in the Y direction.

2. The method according to claim 1, **characterized in that** several linear scans of the sample are performed by the transducer unit (10), wherein the transducer unit (10) is displaced in each case by a small, preferably constant, displacement increment (U) in the Y direction in each case after a linear scan of the sample, and, after a predetermined number n (n ≥ 2, 3,...) of several linear scans of the sample, the transducer unit (10) is displaced in the Y direction by a large, preferably constant, displacement increment (W), which is greater than the small displacement increment (U), and/or that, after a linear scan of the sample, the transducer unit (10) is displaced in the Y direction by a large, preferably constant, displacement increment (W), and, after the displacement of the transducer unit by the large displacement increment (W), several n (n ≥ 2, 3,...) linear scans of the sample are taking place by the transducer unit (10), wherein, after each of the several linear n (n ≥ 2, 3,...) scans of the sample, the transducer unit (10) is displaced in each case by a small, preferably constant, displacement increment (U) in the Y direction, which is smaller than the large displacement increment (W).

3. The method according to claim 1 or 2, **characterized in that** the transducer unit (10) is moved in a meandering course in the X-Y plane relative to the sample.

4. The method according to any one of claims 1 to 3, **characterized in that**
a.) the sample is scanned by using a transducer unit (10) for a scanning acoustic microscope, in particular an ultrasonic scanning microscope, with several transducer elements (1, 2, 3, 4, 12, 14) comprising respectively one transducer (20) and one lens (21, 22), wherein at least two transducer elements (1, 2, 3, 4, 12, 14) comprise different focal lengths, or
b.) the sample is scanned by using a transducer unit (10) with several transducer elements (1, 2, 3, 4, 12, 14) comprising respectively one transducer (20) and one, preferably acoustic, lens (21, 22), wherein in particular the transducer elements (1, 2, 3, 4, 12, 14) comprise the same focal length and/or the transducer elements (1, 2, 3, 4, 12, 14) are arranged next to each other in a linear or rhombic arrangement in the Y direction.

5. The method according to any one of claims 1 to 4, **characterized in that** the transducer unit (10) comprises several transducer elements (1, 2, 3, 4, 12, 14) arranged in the Y direction, preferably one behind the other and/or linearly, wherein several linear m (m ≥ 2, 3, 4, ...) scans are performed in the X direction by means of the respective transducer elements (1, 2, 3, 4, 12, 14), wherein the distances of the linear m (m ≥ 2, 3, 4, ...) scans by the respective transducer elements (1, 2, 3, 4, 12, 14) are equidistant in the Y direction and, after the performance of the linear m (m ≥ 2, 3, 4, ...) scans by the transducer unit (10), the transducer unit (10) is displaced in the Y direction with the displacement increment, which corresponds to the product of the equidistant distance of the linear scans with the number of the linear m (m ≥ 2, 3, 4, ...) scans and the number of the transducer elements (1, 2, 3, 4, 12, 14) of the transducer unit (10) in the Y direction.

6. The method according to any one of claims 1 to 5, **characterized in that** the transducer unit (10), preferably with several transducer elements (1, 2, 3, 4, 12, 14), comprises a length in the Y direction, wherein, after several linear scans in the X direction by the transducer unit (10), the transducer unit (10) is displaced in the Y direction with a displacement increment that corresponds to the length of the transducer unit (10), wherein the respective distances of the several linear scans performed prior to the displacement of the transducer unit (10) in the Y direction with the displacement increment that corresponds to the length of the transducer unit (10) correspond to a natural fraction of the length of the transducer unit (10) (length of the transducer unit / t, t ≥ 2, 3, 4,...).

7. The method according to any one of claims 1 to 5, **characterized in that** the transducer unit (10) comprises several transducer elements (1, 2, 3, 4, 12, 14) arranged in the Y direction, preferably next to each other and/or linearly, wherein the transducer elements (1, 2, 3, 4, 12, 14) each comprise a, preferably constant, width in the Y direction, wherein several linear p (p ≥ 2, 3, 4,...) scans are performed in the X direction, wherein the distances between the linear p (p ≥ 2, 3, 4,...) scans correspond to a fraction of the width of the transducer elements (1, 2, 3, 4, 12, 14) (width of the transducer elements (1, 2, 3, 4, 12, 14) / p, p ≥ 2, 3, 4,...), and, after said performance of the linear p (p ≥ 2, 3, 4,...) scans, the transducer unit (10) is displaced in the Y direction by the displacement increment, which corresponds to a multiple of the width of the transducer elements (1, 2, 3, 4, 12, 14).

8. The method according to any one of claims 5 to 7, **characterized in that** the, in particular large, displacement increment (W) of the transducer unit (10) in the Y direction is corrected by a tolerance correction value after the performance of the several linear scans by the transducer unit (10), wherein in particular the tolerance correction value is formed such that the distance in the Y direction of the last linear scan prior to the displacement of the transducer unit (10) by the large displacement increment (W) to the first linear scan after the displacement of the transducer unit by the large displacement increment (W) corresponds to the distance of the several linear scans prior to and/or after the displacement of the transducer unit (10) by the large displacement increment (W) in the Y direction, or wherein in particular the tolerance correction value is formed such that the distance between all linear scans by the transducer unit (10) is constant.

9. The method according to any one of claims 1 to 8, **characterized in that** the transducer unit (10) comprises several transducer elements (1, 2, 3, 4, 12, 14), wherein the transducer elements (1, 2, 3, 4, 12, 14) are operated in parallel.

10. The method according to any one of claims 4 to 9, **characterized in that**, in particular in the case a.), preferably exclusively, two transducer elements (1, 2, 3, 4, 12, 14) with different focal lengths in relation to an X-Y plane are arranged next to each other in a linear arrangement in the Y direction or one behind the other in the X direction, or that, preferably exclusively, two transducer elements (1, 2, 3, 4, 12, 14) with different focal lengths in relation to an X-Y plane are arranged, in particular diagonally, displaced to each other in the X direction and in the Y direction.

11. The method according to any one of claims 4 to 10, **characterized in that**, in particular in the case a.), the transducer unit (10) comprises several transducer elements (1, 2, 3, 4, 12, 14) with respectively a first focal length and several transducer elements (1, 2, 3, 4, 12, 14) with respectively a second focal length, which differs from the first focal length in relation to an X-Y plane,
wherein an array of transducer elements (1, 2, 3, 4, 12, 14) arranged next to each other, in particular linearly, in the Y direction with the first focal length and an array of transducer elements (1, 2, 3, 4, 12, 14) arranged next to each other, in particular linearly, in the Y direction with the second focal length are arranged one behind the other in the X direction,
or wherein an array of transducer elements (1, 2, 3, 4, 12, 14) arranged next to each other, in particular linearly, in the Y direction with the first focal length and an array of transducer elements (1, 2, 3, 4, 12, 14) arranged next to each other, in particular linearly, in the Y direction with the second focal length are arranged, in particular diagonally, displaced to each other in the X direction and in the Y direction.
or wherein transducer elements (1, 2, 3, 4, 12, 14) with the first focal length and transducer elements (1, 2, 3, 4, 12, 14) with the second focal length are arranged one behind the other, in particular linearly, in an alternating order in the Y direction.

12. A scanning acoustic microscope, in particular ultrasonic scanning microscope, comprising a transducer unit for scanning a sample in a X-Y-plane and means for moving the transducer unit in the X-direction, and means for displacing the transducer unit in the Y-direction, **characterized in that** the scanning acoustic microscope is configured to carry out the method according to any one of claims 1 to 11.

## Revendications

1. Procédé pour faire fonctionner un microscope acoustique à balayage, en particulier un microscope à balayage à ultrasons, dans lequel un échantillon est balayé dans un plan X-Y au moyen d'une unité (10) formant transducteur, en particulier avec un ou plusieurs éléments transducteurs (1, 2, 3, 4, 12, 14) présentant chacun un transducteur (20) et une lentille (21, 22), l'unité (10) formant transducteur étant déplacée dans la direction X pour un balayage linéaire de l'échantillon, l'unité (10) formant transducteur, après le balayage linéaire, ou après un balayage linéaire, par elle, de l'échantillon, étant déplacée dans la direction Y d'un pas de déplacement, **caractérisé en ce que**, pendant un examen de l'échantillon au moyen du procédé de balayage pour le balayage de l'échantillon, la taille du pas de déplacement de l'unité (10) formant transducteur dans la direction Y est modifiée, en particulier après le déplacement de l'unité (10) formant transducteur dans la direction Y, au moins un autre balayage linéaire de l'échantillon étant effectué au moyen de l'unité (10) formant transducteur dans la direction Y.

2. Procédé selon la revendication 1, **caractérisé en ce que** plusieurs balayages linéaires de l'échantillon sont effectués par l'unité (10) formant transducteur, l'unité (10) formant transducteur étant déplacée après chaque balayage linéaire de l'échantillon d'un petit pas de déplacement (U), de préférence constant, dans la direction Y, et après un nombre prédéterminé n (n ≥ 2, 3, ...) de plusieurs balayages linéaires de l'échantillon, l'unité (10) formant transducteur est déplacée d'un grand pas de déplacement (W), de préférence constant, qui est supérieur au petit pas de déplacement (U), dans la direction Y et/ou **en ce qu'**après un balayage linéaire de l'échantillon, l'unité (10) formant transducteur est déplacée d'un grand pas de déplacement, de préférence constant, dans la direction Y, et après le déplacement de l'unité (10) formant transducteur du grand pas de déplacement (W), plusieurs, n, (n ≥ 2, 3, ...) balayages linéaires de l'échantillon sont effectués par l'unité (10) formant transducteur ; après chacun desdits plusieurs, n, (n ≥ 2, 3, ...) balayages linéaires de l'échantillon, l'unité (10) formant transducteur est déplacée à chaque fois d'un petit pas de déplacement (U), de préférence constant, dans la direction Y, qui est inférieur au grand pas de déplacement (W).

3. Procédé selon la revendication 1 ou la revendication 2, **caractérisé en ce que** l'unité (10) formant transducteur est déplacée dans le plan X-Y par rapport à l'échantillon selon un parcours en méandres.

4. Procédé selon l'une des revendications 1 à 3, **caractérisé en ce que**
a.) l'échantillon est déplacé au moyen d'une unité (10) formant transducteur pour un microscope acoustique à balayage, en particulier un microscope à balayage à ultrasons, comprenant plusieurs éléments transducteurs (1, 2, 3, 4, 12, 14) présentant chacun un transducteur (20) et une lentille (21, 22), au moins deux éléments transducteurs (1, 2, 3, 4, 12, 14) présentant des distances focales différentes, ou
b.) **en ce que** l'échantillon est balayé au moyen d'une unité (10) formant transducteur présentant plusieurs éléments transducteurs (1, 2, 3, 4, 12, 14) présentant chacun un transducteur (20) et une lentille (21, 22), les éléments transducteurs (1, 2, 3, 4, 12, 14) présentant en particulier la même longueur focale et/ou les éléments transducteurs (1, 2, 3, 4, 12, 14) sont agencés les uns à côté des autres dans un agencement linéaire ou en forme de losange dans la direction Y.

5. Procédé selon l'une des revendications 1 à 4, **caractérisé en ce que** l'unité (10) formant transducteur présente plusieurs éléments transducteurs (1, 2, 3, 4, 12, 14) agencés dans la direction Y, de préférence les uns derrière les autres et/ou de manière linéaire, plusieurs, m, balayages linéaires (m ≥ 2, 3, 4, ...) étant effectués dans la direction X au moyen des éléments transducteurs respectifs (1, 2, 3, 4, 12, 14), les distances entre les m balayages linéaires (m ≥ 2, 3, 4, ...) par les éléments transducteurs respectifs (1, 2, 3, 4, 12, 14) dans la direction Y étant équidistantes, et, après la réalisation des m balayages linéaires (m ≥ 2, 3, 4, ...) par l'unité (10) formant transducteur, l'unité (10) formant transducteur est déplacée dans la direction Y, du pas de déplacement qui correspond au produit de la distance équidistante des balayages linéaires par le nombre m de balayages linéaires (m ≥ 2, 3, 4, ...) et le nombre d'éléments transducteurs (1, 2, 3, 4, 12, 14) de l'unité (10) formant transducteur dans la direction Y.

6. Procédé selon l'une des revendications 1 à 5, **caractérisé en ce que** l'unité (10) formant transducteur, de préférence avec plusieurs éléments transducteurs (1, 2, 3, 4, 12, 14), présente une longueur dans la direction Y, l'unité (10) formant transducteur étant décalée dans la direction Y après plusieurs balayages linéaires dans la direction X par l'unité (10) formant transducteur avec un pas de décalage qui correspond à la longueur de l'unité (10) formant transducteur, les distances respectives entre la pluralité de balayages linéaires effectués avant le déplacement de l'unité (10) formant transducteur dans la direction Y, du pas de déplacement correspondant à la longueur de l'unité (10) formant transducteur correspondant à une fraction naturelle de la longueur de l'unité (10) formant transducteur (longueur de l'unité (10) formant transducteur / t, t ≥ 2, 3, 4, ...).

7. Procédé selon l'une des revendications 1 à 5, **caractérisé en ce que** l'unité (10) formant transducteur présente plusieurs éléments transducteurs (1, 2, 3, 4, 12, 14) agencés dans la direction Y, de préférence les uns à côté des autres et/ou de manière linéaire, les éléments transducteurs (1, 2, 3, 4, 12, 14) présentant chacun une largeur, de préférence constante, dans la direction Y, plusieurs balayages linéaires p (p ≥ 2, 3, 4, ...) étant réalisés dans la direction X, les distances entre les p balayages linéaires (p ≥ 2, 3, 4, ....) correspondant à une fraction de la largeur des éléments transducteurs (1, 2, 3, 4, 12, 14) (largeur des éléments transducteurs (1, 2, 3, 4, 12, 14) / p, p ≥ 2, 3, 4, ...) et, après la réalisation des p balayages linéaires (p ≥ 2, 3, 4, ...), l'unité (10) formant transducteur est déplacée dans la direction Y, du pas de décalage qui correspond à un multiple de la largeur des éléments transducteurs (1, 2, 3, 4, 12, 14).

8. Procédé selon l'une des revendications 5 à 7, **caractérisé en ce que** le pas de déplacement (W), en particulier grand, de l'unité (10) formant transducteur dans la direction Y est corrigé d'une valeur de correction de tolérance après la réalisation de la pluralité de balayages linéaires par l'unité (10) formant transducteur, la valeur de correction de tolérance étant notamment formée de telle sorte que la distance dans la direction Y entre le dernier balayage linéaire avant le déplacement de l'unité (10) formant transducteur du grand pas de déplacement (W) et le premier balayage linéaire après le déplacement de l'unité (10) formant transducteur du grand pas de déplacement (W) correspond à la distance entre la pluralité de balayages linéaires avant et/ou après le déplacement de l'unité (10) formant transducteur du grand pas de déplacement (W) dans la direction Y, ou, en particulier, la valeur de correction de tolérance étant formée de telle sorte que la distance entre tous les balayages linéaires par l'unité (10) formant transducteur est constante.

9. Procédé selon l'une des revendications 1 à 8, **caractérisé en ce que** l'unité (10) formant transducteur présente plusieurs éléments transducteurs (1, 2, 3, 4, 12, 14), les éléments transducteurs (1, 2, 3, 4, 12, 14) fonctionnant en parallèle.

10. Procédé selon l'une des revendications 4 à 9, **caractérisé en ce que**, en particulier dans le cas a.), de préférence exclusivement, deux éléments transducteurs (1, 2, 3, 4, 12, 14) ayant des longueurs focales différentes par rapport à un plan X-Y sont agencés les uns à côté des autres dans une disposition linéaire dans la direction Y ou les uns derrière les autres dans la direction X, ou **en ce que**, de préférence exclusivement, deux éléments transducteurs (1, 2, 3, 4, 12, 14) ayant des longueurs focales différentes par rapport à un plan X-Y sont agencés de manière décalée les uns par rapport aux autres dans la direction X et dans la direction Y, en particulier en diagonale.

11. Procédé selon l'une des revendications 4 à 10, **caractérisé en ce que**, en particulier dans le cas a.), l'unité (10) formant transducteur comprend plusieurs éléments transducteurs (1, 2, 3, 4, 12, 14) ayant chacun une première longueur focale et plusieurs éléments transducteurs (1, 2, 3, 4, 12, 14) ayant chacun une deuxième longueur focale qui diffère de la première longueur focale, par rapport à un plan X-Y,
un réseau d'éléments transducteurs (1, 2, 3, 4, 12, 14) ayant la première longueur focale disposés les uns à côté des autres dans la direction Y, en particulier de façon linéaire, et un réseau d'éléments transducteurs (1, 2, 3, 4, 12, 14) ayant la deuxième longueur focale, disposés les uns à côté des autres dans la direction Y, en particulier de façon linéaire, sont agencés les uns derrière les autres dans la direction X,
ou un réseau d'éléments transducteurs (1, 2, 3, 4, 12, 14) ayant la première longueur focale, disposés les uns à côté des autres dans la direction Y, en particulier de façon linéaire, et un réseau d'éléments transducteurs (1, 2, 3, 4, 12, 14) ayant la deuxième longueur focale, disposés les uns à côté des autres dans la direction Y, en particulier de façon linéaire, sont agencés de manière décalée les uns par rapport aux autres dans la direction X et dans la direction Y, en particulier en diagonale,
ou des éléments transducteurs (1, 2, 3, 4, 12, 14) ayant la première longueur focale et des éléments transducteurs (1, 2, 3, 4, 12, 14) ayant la deuxième longueur focale disposés dans un ordre alterné dans la direction Y, en particulier de manière linéaire, sont agencés les uns derrière les autres.

12. Microscope acoustique à balayage, en particulier microscope à balayage à ultrasons, comprenant une unité de transducteur pour balayer un échantillon dans un plan X-Y et des moyens pour déplacer l'unité de transducteur dans la direction X, et des moyens pour déplacer l'unité de transducteur dans la direction Y, **caractérisé en ce que** le microscope acoustique à balayage est conçu pour mettre en œuvre le procédé selon l'une des revendications 1 à 11.
